# EUROPÄISCHE PATENTSCHRIFT

(11) **EP 0 623 990 B1**
(45) Veröffentlichungstag und Bekanntmachung des Hinweises auf die Patenterteilung: **03.09.1997**
(21) Anmeldenummer: 94810250.4
(22) Anmeldetag: 03.05.1994
(51) Int. Cl.: H02K 15/09, B23Q 7/04

(54) **Ankerwickelmaschine**
Armature winding machine
Machine à bobiner les induits

(30) Priorität: 06.05.1993 CH 1400/93
(43) Veröffentlichungstag der Anmeldung: 09.11.1994
(73) Patentinhaber: Zihlmann Wickeltechnik AG, 5436 Würenlos (CH)
(72) Erfinder: Kübler, Walter, CH-8003 Zürich (CH)
(74) Vertreter: Patentanwälte Breiter + Wiedmer AG

(56) Entgegenhaltungen:
- EP-A- 0 459 030
- EP-A- 0 508 198
- GB-A- 1 590 920
- US-A- 3 522 912
- PATENT ABSTRACTS OF JAPAN vol. 8, no. 170 (M-315) (1607) 7. August 1984 & JP-A-59 064 249 (TOYODA KOKI) 12. April 1984

## Beschreibung

Die Erfindung betrifft eine Wickelmaschine zum Wickeln von Kollektorankern für elektrische Motoren, mit mindestens einem Schaltapparat und einer mit diesem in Wirkverbindung stehenden, um eine Spannachse drehbaren Spannvorrichtung zur Aufnahme der Ankerwelle eines Kollektorankers sowie einem der Spannvorrichtung gegenüberstehenden, in einer Halterung angeordneten und in der Spannachse innerhalb von den Kollektor übergreifenden Wickelhülsen liegenden Ankerwellenlager zur Aufnahme und Abstützung des von der Spannvorrichtung wegweisenden freien Endes der Ankerwelle eines in der Spannvorrichtung eingespannten Kollektorankers.

Bei üblichen Wickelmaschinen wird der Kollektoranker zum Wickeln auf der Kollektorseite eingespannt. Eine derartige Wickelmaschine ist aus der EP-A-0 508 198 bekannt. Der zu wickelnde Kollektoranker wird über Greiferarme in den Wickelbereich geführt, dort in die Spannvorrichtung des Schaltapparates eingesetzt und nach erfolgter Wicklung wieder auf gleiche Weise aus dem Wickelbereich herausgeführt. Die hier notwendigen Uebergabevorrichtungen erfordern einen verhältnismässig hohen Platzbedarf im Wickelbereich und erschweren deshalb die Bedienung, da in diesem Bereich die Wickelausrüstung mit Wickelköpfen, Klemmern und Drahtzuführungen angeordnet ist.

In der EP-A-0 318 307 wird bei einer gleichartigen Wickelmaschine eine Schnellspannvorrichtung zum rascheren Auswechseln der Wickelhülsen vorgeschlagen.

Die DE-C-33 30 687 offenbart innerhalb einer Vorrichtung zur automatischen Fertigung von Kollektorankern eine Wickelstation der eingangs erwähnten Art. Dort werden in einem Werkstückhalter auf der Gegenkollektorseite eingespannte Kollektoranker von einem Transportband abgehoben, mit dem Werkstückhalter an einen Schaltapparat angekuppelt, gewickelt, vom Schaltapparat abgekuppelt und mit dem Werkstückhalter wiederum auf das Transportband zurückgestellt. Bei diesem System erfolgt das Einspannen des Kollektorankers ausserhalb des Wickelbereichs und es sind keine in den Wickelbereich einragenden Uebergabevorrichtungen notwendig. Jedoch ist eine grosse Anzahl von Werkstückhaltern erforderlich.

Angesichts dieser Gegebenheiten hat sich der Erfinder die Aufgabe gestellt, eine Wickelmaschine der eingangs erwähnten Art zu schaffen, welche das Ein- und Ausspannen sowie gegebenenfalls das Ausrichten der Kollektoranker in der Spannvorrichtung des Schaltapparates ohne Behinderung durch Ausrüstungsgegenstände der eigentlichen Wickelvorrichtung ermöglicht und mit welcher die Taktzeit und damit die Fertigungskapazität weiter erhöht werden können.

Zur erfindungsgemässen Lösung der Aufgabe führt, dass der/ die Schaltapparat/e symmetrisch zu einer Drehachse angeordnet und durch eine Drehbewegung um die Drehachse die Spannvorrichtung/en abwechselnd in die dem Ankerwellenlager genüberliegende Stellung bringbar ist/sind.

Bei einer bevorzugten Ausführungsform der Erfindung sind zwei Schaltapparate mit in entgegengesetzte Richtung weisenden Spannvorrichtungen sowie parallelen Spannachsen symmetrisch zu einer Drehachse angeordnet und durch eine Drehbewegung um die Drehachse die Spannvorrichtungen abwechselnd in die dem Ankerwellenlager gegenüberliegende Stellung bringbar.

Die erfindungsgemässe Wickelmaschine mit zwei oder mehr Schaltapparaten ermöglicht es, während eines Wickelvorgangs gleichzeitig den nächsten zu wickelnden Kollektoranker einzuspannen und gegebenenfalls auszurichten. Sobald die Wicklung des einen Kollektorankers beendet ist, wird die Anordnung mit zwei Schaltapparaten um 180° gedreht und der ausserhalb des Wickelbereichs aufgespannte und ausgerichtete Kollektoranker befindet sich nun in Wickelstellung und ist sofort für den nächsten Wickelvorgang bereit. Der gewickelte Kollektoranker aus dem vorhergehenden Wickelvorgang befindet sich jetzt ausserhalb des Wickelbereichs und kann dort ohne Beeinflussung des Wickelvorgangs der Spannvorrichtung entnommen werden. Durch das Ein- und Ausspannen der Kollektoranker ausserhalb des Wickelbereichs bei gleichzeitiger Wicklung eines Kollektorankers lassen sich die Taktzeiten mit der erfindungsgemässen Wickelmaschine erheblich verringern.

Bei einer bevorzugten raumsparenden Ausführungsform der Erfindung mit zwei Schaltapparaten sind diese nebeneinander mit gegeneinander versetzten Spannachsen angeordnet.

Zweckmässigerweise sind die Schaltapparate auf einer gemeinsamen Drehplatte montiert, die auf einer Platte eines Drehtisches drehbar gelagert ist.

Zur Drehung der Spannvorrichtung um die Spannachse ist jeder Schaltapparat mit einem Servomotor ausgerüstet. Der Antrieb der Spannvorrichtung kann grundsätzlich über eine Welle, insbesondere ein Hohlwelle, direkt erfolgen, jedoch wird zum Ausgleich von Schwankungen die Zwischenschaltung eines Getriebes, insbesondere eines Stirnrad-Schneckengetriebes, bevorzugt.

Bei einer zweckmässigen Ausgestaltung der erfindungsgemässen Wickelmaschine weisen die der Spannvorrichtung gegenüberstehenden Wickelhülsen zum Festhalten des freien Drahtendes während des Wickelvorganges eine über dem Kollektor des Kollektorankers verschiebbare Klemmhülse auf. Diese ist bevorzugt innerhalb einer Leithülse und gegenüber dieser dreh- und längsverschiebbar angeordnet, wobei das Ankerwellenlager zweckmässigerweise in die Klemmhülse integriert ist.

Bevorzugt weist die Halterung einen Lagersupport auf, wobei die Klemmhülse sowie eine Abdeckhülse an im Lagersupport gelagerten, in Spannrichtung verschiebbaren Wellen festgelegt sind. Hierbei kann die Klemmhülse rückseitig an einem auf den Wellen verschiebbar gelagerten Schlitten abgestützt sein.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1:: eine teilweise längsgeschnittene Seitenansicht eines Schaltapparates mit aufgesetztem Spannwerkzeug;
- Fig. 2:: einen horizontalen Längsschnitt durch eine Kassette mit aufgesetzten Wickelhülsen;
- Fig. 3:: eine Seitenansicht der Kassette von Fig. 2;
- Fig. 4:: eine schematisierte Draufsicht auf eine Drehtischplatte mit zwei Schaltapparaten von Fig. 1.

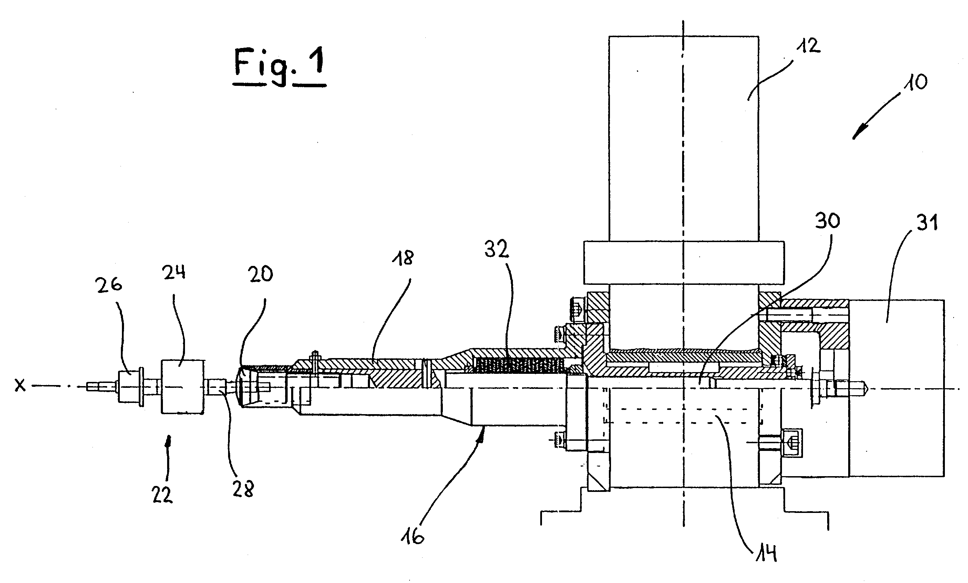

Ein Schaltapparat 10 einer in der Zeichnung aus Gründen der besseren Uebersicht im einzelnen nicht dargestellten Ankerwickelmaschine weist gemäss Fig. 1 einen Gleichstrommotor 12 auf, der über ein Stirnrad-Schneckengetriebe 14 ein Spannwerkzeug 16 entsprechend dem jeweils gewünschten Verschaltwinkel um seine Spannachse x drehbar antreibt. Das Spannwerkzeug 16 ist einends mit einer Spannzange 20 zur Aufnahme des einem Blechpaket 24 benachbarten Teils der Ankerwelle 28 eines Kollektorankers 22 für einen Elektromotor versehen.

Die Spannzange 20 ist innerhalb einer dem Schaltapparat 10 aufgesetzten Spannbüchse 18 angeordnet. Die Betätigung der Spannzange 20 zum Ein- und Ausspannen des Kollektorankers 22 erfolgt in bekannter Weise über einen Spanndorn 30, wobei die Spannkraft der Spannzange 20 von innerhalb der Spannbüchse 18 konzentrisch um den Spanndorn 30 angeordneten Tellerfedern 32 erzeugt wird. Zum Lüften der Spannzange dient ein auf den Spanndorn (30) wirkender Kurzhubzylinder (31).

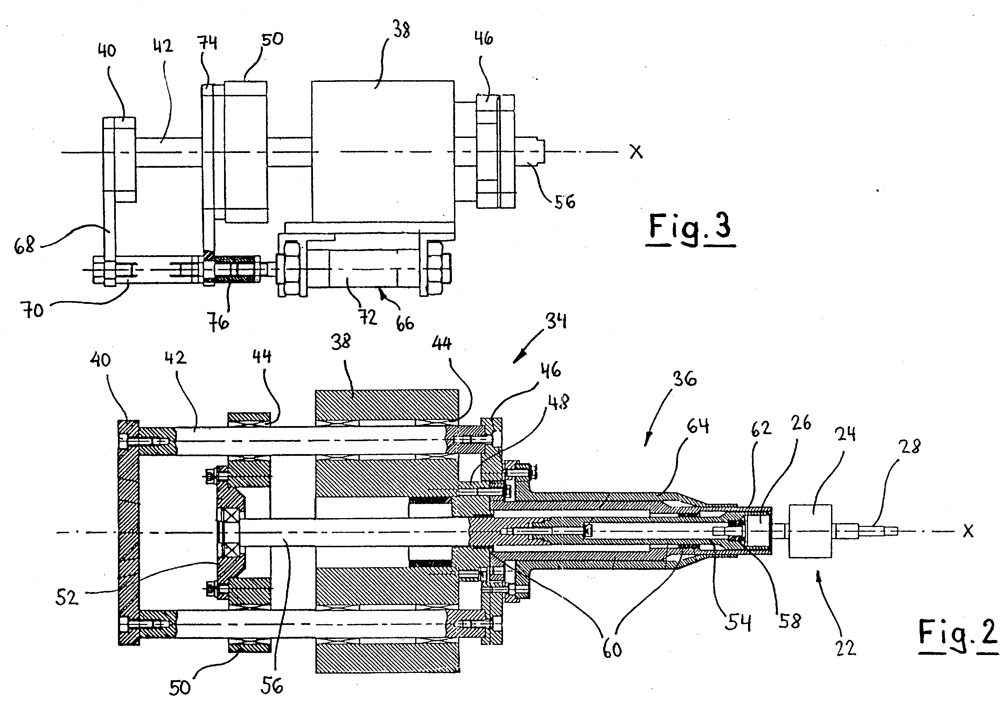

Dem Schaltapparat 10 gegenüber ist eine Kassette 34 mit auf dieser aufgesetzten Wickelhülsen 36 angeordnet. Die Wickelhülsen 36 liegen hierbei in der Spannachse x und nehmen -- wie nachfolgend näher erläutert -- während des Betriebs der Ankerwickelmaschine den dem Kollektor 26 benachbarten Teil der Ankerwelle 28 sowie den Kollektor 26 des Kollektorankers 22 auf. Zum besseren Verständnis des Zusammenwirkens von Schaltapparat 10 und Wickelhülsenkassette 34 sind die Fig. 1 und 2 nebeneinanderliegend und mit korrespondierender Spannachse x zu betrachten.

Wie in Fig. 2 gezeigt, weist die Kassette 34 einen ortsfesten Lagersupport 38 auf, in welchem zwei einends über ein Joch 40 verbundene Wellen 42 auf Kugelhülsenlagern 44 in Spannrichtung x verschiebbar gelagert sind. Auf der dem Schaltapparat 10 zugewandten Seite des Lagersupports 38 ist den beiden Wellen 42 ein Abdeckhülsenflansch 46 aufgesetzt. Ein Leithülsenflansch 48 ist direkt mit dem Lagersupport 38 verbunden. Zwischen dem Lagersupport 38 und dem endständigen Joch 40 ist zudem ein auf den Wellen 42 über Kugelhülsenlager 44 verschiebbar gelagerter Schlitten 50 mit einem Klemmhülsenlager 52 angeordnet.

Die insgesamt als Wickelhülsen 36 bezeichneten Hülsen setzen sich zusammen aus einer zentralen Klemmhülse 54, die einends einer rückseitig im Klemmhülsenlager 52 abgestützten Klemmhülsenwelle 56 aufgesetzt und andernends mit einem Ankerwellenlager 58 zur Aufnahme und Abstützung der Ankerwelle 28 während des Wickelvorgangs ausgestattet ist. Die Klemmhülse 54 übergreift beim Einführen der Ankerwelle 28 in das Ankerwellenlager 58 den Kollektor 26 und dient zum klemmenden Festhalten des freien Endes eines auf das Blechpaket 24 zu wickelnden Drahtes. Die Klemmhülse 54 ist über Gleitlager 60 innerhalb einer am Leithülsenflansch 48 festgelegten Leithülse 62 um die Spannachse x drehbar und in deren Richtung längsverschiebbar gelagert. Die Leithülse 62 ist zusätzlich von einer am Abdeckhülsenflansch 46 befestigten Abdeckhülse 64 übergriffen.

Wie aus Fig. 3 hervorgeht, erfolgt die Verschiebung der Abdeckhülse 64 in Spannrichtung x über einen am Lagersupport 38 angeflanschten ersten Zylinder 66, der mit einer am Joch- 40 festgelegten ersten Kupplungsplatte 68 über eine erste Kupplung 70 verbunden ist. Zur Längsverschiebung der Klemmhülse 54 innerhalb der Leithülse 62 ist am Lagersupport 38 ein zweiter Zylinder 72 angeflanscht, der mit einer am Schlitten 50 festgelegten zweiten Kupplungsplatte 74 über eine zwischenliegende zweite Kupplung 76 in Wirkverbindung steht.

Zur stützenden Aufnahme der Ankerwelle 28 eines in der Spannzange 20 des Schaltapparates 10 gehaltenen Kollektorankers 22 schiebt sich zunächst durch eine Verschiebung des Schaltapparates 10 in der Spannachse x die Leithülse 62 über den Kollektor 26. Durch Betätigung des ersten Zylinders 66 schiebt sich sodann die Abdeckhülse 64 über die Leithülse 62. Anschliessend erfolgt durch Betätigung des zweiten Zylinders 72 die Verschiebung der Klemmhülse 54 innerhalb der Leithülse 62, wobei einerseits ein zwischen Klemmhülse 54 und Kollektor 26 eingeführtes Drahtende beim Aufschieben der Klemmhülse 54 auf den Kollektor 26 klemmend gehalten und andererseits die Ankerwelle 28 in dem diese übergreifenden Ankerwellenlager 58 abgestützt wird.

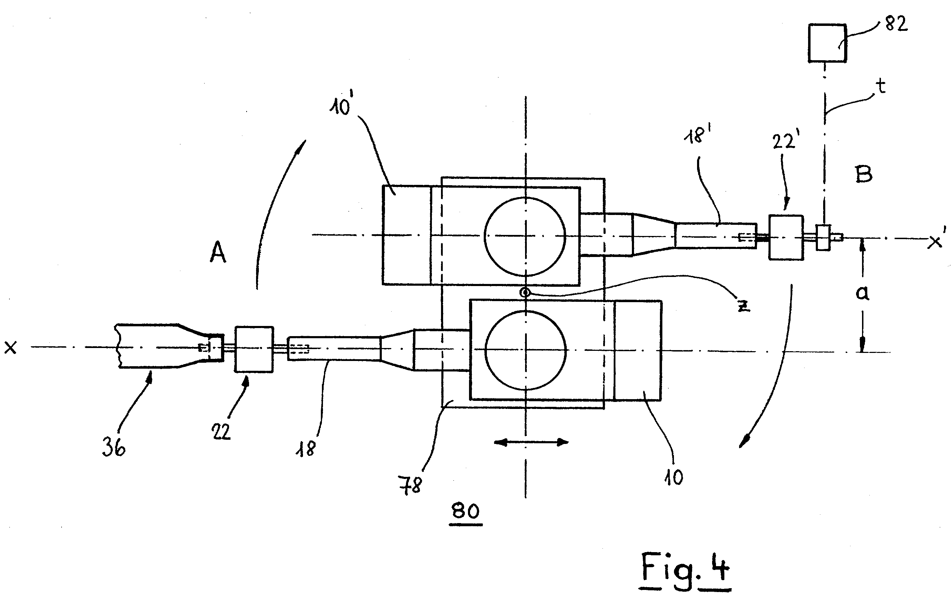

In Fig. 4 ist eine Anordnung mit zwei Schaltapparaten 10, 10' dargestellt. Die beiden Schaltapparate 10, 10' sind nebeneinander auf einer Drehplatte 78 symmetrisch bezüglich einer vertikalen Drehachse z montiert, wobei die entsprechenden Spannbüchsen 18, 18' in entgegensetzte Richtung weisen und ihre parallelen Spannachsen x, x' um ein Mass a gegeneinander versetzt sind. Die Drehplatte 78 ist auf einer Drehtischplatte 80 um die vertikale Drehachse z drehbar gelagert und steht mit einem in der Zeichnung nicht dargestellten Elektroantrieb zur Ausführung der Drehbewegung in Verbindung. Die Verschiebung der Schaltapparate 10, 10' in Spannrichtung x zur Einnahme der endgültigen Wickelposition erfolgt über in der Zeichnung nicht dargestellte, an der Drehtischplatte 80 angeordnete Führungsschienen.

Während sich jeweils die Spannbüchse 18 des einen Schaltapparates 10 und die Wickelhülsen 36 der Kassette 34 mit zwischen diesen eingespanntem Kollektoranker 22 im Wickelbereich A gegenüberstehen, befindet sich die Spannbüchse 18' des zweiten Schaltapparates 10' ausserhalb des Wickelbereiches im Bereich B und dient dem Aufspannen und Positionieren eines ungewickelten Kollektorankers 22'. Ueber einen Sensor 82 mit einer optischen Achse t wird der Kollektoranker in der Spannbüchse 18' innerhalb des Bereiches B für den nächsten Wickelvorgang im Wickelbereich A ausgerichtet.

## Patentansprüche

1. Wickelmaschine zum Wickeln von Kollektorankern (22) für elektrische Motoren, mit mindestens einem Schaltapparat (10) und einer mit diesem in Wirkverbindung stehenden, um eine Spannachse (x) drehbaren Spannvorrichtung (18) zur Aufnahme der Ankerwelle (28) eines Kollektorankers (22) sowie einem der Spannvorrichtung (18) gegenüberstehenden, in einer Halterung (34) angeordneten und in der Spannachse (x) innerhalb von den Kollektor (26) übergreifenden Wickelhülsen (36) liegenden Ankerwellenlager (58) zur Aufnahme und Abstützung des von der Spannvorrichtung (18) wegweisenden freien Endes der Ankerwelle (28) eines in der Spannvorrichtung (18) eingespannten Kollektorankers (22),
dadurch gekennzeichnet,
dass der/die Schaltapparat/e (10) symmetrisch zu einer Drehachse (z) angeordnet und durch eine Drehbewegung um die Drehachse (z) die Spannvorrichtung/en (18) abwechselnd in die dem Ankerwellenlager (58) gegenüberliegende Stellung bringbar ist/sind.

2. Wickelmaschine nach Anspruch 1, dadurch gekennzeichnet, dass zwei Schaltapparate (10,10') mit in entgegengesetzte Richtung weisenden Spannvorrichtungen (18,18') sowie parallelen Spannachsen (x,x') symmetrisch zu einer Drehachse (z) angeordnet und durch eine Drehbewegung um die Drehachse (z) die Spannvorrichtungen (18,18') abwechselnd in die dem Ankerwellenlager (58) gegenüberliegende Stellung bringbar sind.

3. Wickelmaschine nach Anspruch 2, dadurch gekennzeichnet, dass die Schaltapparate (10,10') nebeneinander mit um ein Mass (a) gegeneinander versetzten Spannachsen (x,x') angeordnet sind.

4. Wickelmaschine nach einem der Ansprüche 1 bis 3, dadurch gekennzeichnet, dass die Schaltapparate (10,10') auf einer gemeinsamen, auf einer Drehtischplatte (80) drehbar gelagerten Drehplatte (78) montiert sind.

5. Wickelmaschine nach einem der Ansprüche 1 bis 4, dadurch gekennzeichnet, dass zur Drehung der Spannvorrichtung (18,18') um die Spannachse (x,x') jeder Schaltapparat (10,10') einen Servomotor (12) aufweist.

6. Wickelmaschine nach Anspruch 5, dadurch gekennzeichnet, dass der Servomotor (12) über ein Getriebe (14), vorzugsweise ein Stirnrad-Schneckengetriebe, mit der zugehörigen Spannvorrichtung (18,18') in Wirkverbindung steht.

7. Wickelmaschine nach Anspruch 5, dadurch gekennzeichnet, dass der Servomotor (12) über eine Welle, vorzugsweise eine Hohlwelle, direkt mit der zugehörigen Spannvorrichtung (18,18') in Wirkverbindung steht.

8. Wickelmaschine nach einem der Ansprüche 1 bis 7, dadurch gekennzeichnet, dass die der Spannvorrichtung (18) gegenüberstehenden Wickelhülsen (36) zum Festhalten des freien Drahtendes während des Wickelvorganges eine über den Kollektor (26) des Kollektorankers (22) verschiebbare Klemmhülse (54) umfassen.

9. Wickelmaschine nach Anspruch 8, dadurch gekennzeichnet, dass die Klemmhülse (54) innerhalb einer Leithülse (62) und gegenüber dieser dreh- und längsverschiebbar angeordnet ist.

10. Wickelmaschine nach Anspruch 8 oder 9, dadurch gekennzeichnet, dass das Ankerwellenlager (58) in die Klemmhülse (54) integriert ist.

11. Wickelmaschine nach einem der Ansprüche 1 bis 10, dadurch gekennzeichnet, dass die Halterung (34) einen Lagersupport (38) aufweist und die Klemmhülse (54) sowie eine Abdeckhülse (64), an im Lagersupport (38) gelagerten, in Spannrichtung (x) verschiebbaren Wellen (42) festgelegt sind.

12. Wickelmaschine nach einem der Ansprüche 8 bis 11, dadurch gekennzeichnet, dass die Klemmhülse (54) rückseitig an einem auf den Wellen (42) verschiebbar gelagerten Schlitten (50) abgestützt ist.

## Claims

1. Winding machine for winding commutator rotors (22) for electric motors, with at least one switch unit (10) and a clamping device (18) actively connected with this and rotatable about a clamping axis (x) to hold the rotor shaft (28) of a commutator rotor (22), and opposite the clamping device (18), arranged in a holder (34) and lying on the clamping axis (x) within winding tubes (36) overlapping the commutator (26), rotor shaft bearings (58) to hold and support the free end, pointing away from the clamping device (18), of the rotor shaft (28) of a commutator rotor (22) held in the clamping device (18),
characterized in that
the switch unit(s) (10) is(are) arranged symmetrically about an axis of rotation (z) and, by rotation about this axis, the clamping device(s) (18) can be moved alternately into the position opposite that of the rotor shaft bearing (58).

2. Winding machine according to claim 1, characterized in that two switch units (10, 10') with clamping devices (18, 18') facing in opposite directions and with parallel clamping axes (x, x') are arranged symmetrically about an axis of rotation (z) and, by rotation about this axis, the clamping devices (18, 18') can be moved alternately into the position opposite that of the rotor shaft bearing (58).

3. Winding machine according to claim 2, characterized in that the switch units (10, 10') are arranged next to each other with clamping axes (x,x') offset to each other by dimension (a).

4. Winding machine according to any of claims 1 to 3, characterized in that the switch units (10, 10') are mounted on a common rotating plate (78) mounted to rotate on a turntable plate (80).

5. Winding machine according to any of claims 1 to 4, characterized in that to rotate the clamping device (18, 18') about the clamping axis (x, x'), each switch unit (10, 10') has a servomotor (12).

6. Winding machine according to claim 5, characterized in that the servomotor (12) is actively connected via a gear (14), preferably a contrate worm gear, with the associated clamping device (18, 18').

7. Winding machine according to claim 5, characterized in that the servomotor (12) is actively connected via a shaft, preferably a hollow shaft, directly with the associated clamping device (18, 18').

8. Winding machine according to any of claims 1 to 7, characterized in that the winding tubes (36) opposite the clamping device (18) have, to hold the free wire end during the winding process, a clamping sleeve (54) which can be moved over the commutator (26) of the commutator rotor (22).

9. Winding machine according to claim 8, characterized in that the clamping sleeve (54) is arranged inside a guiding sleeve (62) and can rotate and be moved longitudinally in relation to this.

10. Winding machine according to claim 8 or 9, characterized in that the rotor shaft bearing (58) is integrated into the clamping sleeve (54).

11. Winding machine according to any of claims 1 to 10, characterized in that the holder (34) has a bearing support (38), and the clamping sleeve (54) and a cover sleeve (64) are established on shafts (42) which are mounted in the bearing support (38) and can move in the clamping direction (x).

12. Winding machine according to any of claims 8 to 11, characterized in that the clamping sleeve (54) is supported on the back on a slide (50) mounted to move on the shaft (42).

## Revendications

1. Machine à bobiner destinée au bobinage d'induits (22) de moteurs électriques, qui comporte au moins un appareil commutable (10) et un dispositif de serrage (18) relié fonctionnellement à celui-ci et mobile à rotation autour d'un axe (x) de serrage pour recevoir l'arbre (28) d'induit d'un induit (22) et comporte aussi un palier (58) d'arbre d'induit qui fait face au dispositif de serrage (18), est agencé dans un support (34) et situé dans l'axe (x) de serrage à l'intérieur de mandrins (36) qui saisissent le collecteur (26) en le chevauchant et est destiné à recevoir et supporter l'extrémité libre, opposée au dispositif de serrage (18), de l'arbre (28) d'induit d'un induit (22) serré dans le dispositif de serrage (18), caractérisé en ce que le (les) appareil(s) commutable(s) (10) se dispose(nt) de façon symétrique par rapport à un axe de rotation (z) et le (les) dispositif(s) de serrage (18) peut (peuvent) être amené(s) en alternance, par un mouvement de rotation autour de l'axe (z), dans la position qui fait face au palier (58) d'arbre d'induit.

2. Machine à bobiner selon la revendication 1, caractérisée en ce qu'elle comprend deux appareils commutables (10, 10') agencés de façon telle que les dispositifs de serrage (18, 18') font face à des directions opposées et que les axes de serrage (x, x') sont parallèles et symétriques par rapport à un axe de rotation (z) et en ce que les dispositifs de serrage (18, 18') peuvent être amenés en alternance, par un mouvement de rotation autour de l'axe (z), dans la position qui fait face au palier (58) d'arbre d'induit.

3. Machine à bobiner selon la revendication 2, caractérisée en ce que les appareils commutables (10, 10') sont agencés côte-à-côte, et leurs axes de serrage (x, x') sont éloignés l'un de l'autre d'une distance (a).

4. Machine à bobiner selon l'une des revendications 1 à 3, caractérisée en ce que les appareils commutables (10, 10') sont montés sur une plaque rotative commune (78) logée à pivotement sur une plaque (80) de table rotative.

5. Machine à bobiner selon l'une des revendications 1 à 4, caractérisée en ce que chaque appareil commutable (10, 10') est pourvu d'un servomoteur (12) pour la rotation du dispositif de serrage (18, 18') autour de l'axe de serrage (x, x').

6. Machine à bobiner selon la revendication 5, caractérisée en ce que le servomoteur (12) est relié fonctionnellement au dispositif de serrage associé (18, 18') par une transmission (14), de préférence une transmission à pignon droit et vis sans fin.

7. Machine à bobiner selon la revendication 5, caractérisée en ce que le servomoteur (12) est relié fonctionnellement en direct au dispositif de serrage associé (18, 18') par un arbre, de préférence un arbre creux.

8. Machine à bobiner selon l'une des revendications 1 à 7, caractérisée en ce que les mandrins (36) qui font face au dispositif de serrage (18) et sont destinés à maintenir l'extrémité libre de fil pendant le processus de bobinage comportent une douille de serrage (54) mobile à coulissement au-dessus du collecteur (26) de l'induit (22) du collecteur.

9. Machine à bobiner selon la revendication 8, caractérisée en ce que la douille de serrage (54) est disposée à l'intérieur d'une douille de guidage (62) et peut coulisser longitudinalement et à rotation par rapport à celle-ci.

10. Machine à bobiner selon la revendication 8 ou 9, caractérisée en ce que le palier (58) d'arbre d'induit est intégré dans la douille de serrage (54).

11. Machine à bobiner selon l'une des revendications 1 à 10, caractérisée en ce que le support (34) comporte un porte-palier (38) et la douille de serrage (54), ainsi qu'une douille (64) de recouvrement, sont fixées à des arbres (42) logés dans le porte-palier (38) et mobiles à coulissement dans la direction de serrage (x).

12. Machine à bobiner selon l'une des revendications 8 à 11, caractérisée en ce que la douille de serrage (54) est appuyée sur le côté arrière à un coulisseau (50) logé à coulissement sur les arbres (42).
